# EUROPEAN PATENT APPLICATION

(11) **EP 1 266 728 A1**
(43) Date of publication of application: **18.12.2002**
(21) Application number: 01305121.4
(22) Date of filing: 12.06.2001
(51) Int. Cl.: B26D 7/30, B26D 7/01, B26D 7/06, B26D 7/22

(54) **Weighing means for a food slicer**

(71) Applicant: Eastern Sources Housewares (Hong Kong) Limited, Kwun Tong, Kowloon, Hong Kong (CN)
(72) Inventor: Lau, Wing Chung Joseph, 550 Victoria Road, Pokfulam (HK); Ho, Leung Chi, Tsuen wan, New Territories (HK)
(74) Representative: Watkin, Timothy Lawrence Harvey

(57) **Abstract**

An electric food slicer (1) comprising a main body (4) with a base region (2), a disc-like rotary cutting blade (6) supported on the main body (4), weighing means (66) disposed on the base region (2) adjacent to the blade (6) at a position where sliced food will collect, and visual display means (50) to give a visual indication of the weight of food collected on the weighing means (66).

## Description

The present invention relates to a food slicer and, in particular an electric food slicer.

There are a variety of kitchen appliances designed for slicing foods such as meats, for example ham or salami. For instance, electric food slicers which form stand-alone units with rotary cutting blades are available and increasingly popular. Increasingly, users buy a bulk supply of food, for example a large piece of meat and may use such a type of food sheer to pre-cut the food and then pack into small portions for refrigeration and future consumption. Alternatively, users may prefer to remove slices from a large piece of meat right before cooking so that the natural flavour of the meat is better preserved. Most of these appliances however offer limited functions and suffer various drawbacks.

A number of factors of existing designs are of particular concern. Firstly, as people becomes more conscious in their diet, it is desirable that when cutting food into smaller portions for consumption, a relatively precise amount of the food portions can be cut so that people can monitor their dietary intake. Existing slicers do not allow for such monitoring.

The safety of such slicers is of great concern. Slicers necessarily have sharp, rapidly moving cutting blades. Existing designs include various safety features, but often these various safety components are removable (e.g. for cleaning), and the device can still be operated with these components removed, wherein operating the slicer becomes very dangerous.

It is thus an object of the invention to provide a food slicer in which the above issues are addressed, or at least to provide a useful alternative to the public.

According to a first aspect of the present invention, there is provided an electric food slicer comprising a main body with a base region, a disc-like rotary cutting blade supported on the main body, weighing means disposed on the base region adjacent to the blade at a position where sliced food will collect, and visual display means to give a visual indication of the weight of food collected on the weighing means.

According to a second aspect of the present invention, there is provided an electric food slicer comprising a main body supporting a disc-like rotary cutting blade having an exposed region, a generally upwardly extending wall generally co-planar therewith, and a stage extending generally perpendicular to the wall wherein a food-obstructing body is disposed in the region where the stage meets the wall.

The electric food slicer as described in the first and second aspects of the present invention may also be provided with additional features which are described below.

Preferably, the electric food slicer may further comprise a collecting tray which is movable between an inverted position in which it overlies the weighing means and is secured to the base, and an upturned weighing position in which it rests directly on the weighing means.

Suitably, the collecting tray may generally be planar with upturned opposite edge regions, and wherein the base is provided with recesses into which the edge regions arc received in the inverted position.

Advantageously, the weighing means may be provided with a plurality of upstanding protrusions and wherein a surface of the tray which is uppermost in the inverted position is provided with corresponding recesses to receive the protrusions in the weighing position.

Preferably, the visual display means may be a liquid crystal display.

Suitably, a movable wall may be disposed adjacent to the cutting blade and is generally co-planar therewith against which in use, food to be cut is pressed, and wherein sensor means are arranged to output a signal indicative of the relative displacement between the blade and movable wall, which dictates the slicing thickness.

Advantageously, the slicer may further comprise handle means for carrying the slicer.

Preferably, the slicer may further comprise a power cord retractable into the slicer when not in use.

Advantageously, adjustment means may be provided to allow a user to adjust the position of the movable wall relative to the blade, the sensor means detecting the position of said adjustment means.

Preferably, the adjustment means may include a rotatable knob having cam means for moving a support for the wall, rotatable gear means being connected to the support with the sensor being arranged to detect the rotation of the gear means.

Suitably, the output signal may be displayed on the display means as a slice thickness.

Advantageously, the food-obstructing body may be an elongate strip which extends at least beneath the exposed region of the blade.

Preferably, the food-obstructing body may have a dimension in a direction generally parallel to the axis of the blade which obstructs an item of food placed on the stage from being pushed against the wall.

Advantageously, the stage may carry a movable carriage which is movable in a direction generally parallel to the plane of the blade, the food-obstructing body being located on the stage between an edge of the carriage and the upwardly extending wall.

Suitably, a top of the food-obstructing body lies at the same level or below the plane of the carriage when fitted on the carriage.

Advantageously, the stage may be provided with a pair of elongate grooves or openings into which rollers provided on the carriage extend, the food obstructing body being disposed adjacent to that elongate groove which lies closest to the upwardly extending wall.

Preferably, the food obstructing body may be molded unitarily with the stage.

According to a third aspect of the present invention, there is provided an electric food slicer comprising a main body having a generally upwardly extending wall and supporting a disc-like rotary cutting blade generally co-planar therewith, and a food supporting carriage on which food to be sliced is placed, wherein a generally inverted U-shaped shield is provided which extends at one end generally upwardly from the carriage and extending above the blade.

Preferably, the shield may comprise a strip which has width in a direction generally parallel to the blade axis which is substantially greater than its thickness.

The invention will now be described, by way of example only, with reference to the accompanying drawings, in which:-
Fig. 1 is a front perspective view showing a food slicer according to an embodiment of the present invention;
Fig. 2 is a rear perspective view of the food slicer shown in Fig. 1;
Fig. 3 is a front view of the food slicer shown in Fig. 1;
Fig. 4 is a rear view of the food slicer shown in Fig. 1;
Fig. 5 is a left side view of the food slicer shown in Fig. 1;
Fig. 6a is a right side view of the food slicer shown in Fig. 1;
Fig. 6b shows an enlarged portion of the right side view shown in Fig. 6a;
Fig. 7 is a top view of the food slicer shown in Fig. 1;
Fig. 8a is a perspective view showing part of the food slicer shown in Fig. 1;
Fig. 8b is a front view of the part of the food slicer shown in Fig. 8a seen in the direction of an arrow "Y" in Fig. 8a;
Fig. 8c is a side view of the portion of the food slicer shown in Fig. 8a with an item of food placed on a stage, the view being in the direction of an arrow "X" Fig. 8a;
Fig. 9a is a perspective view of part of a base portion of the food slicer shown in Fig. 1, the base portion including a removable food-collecting tray;
Fig. 9b is a perspective view of the base portion shown in Fig. 9a with the food-collecting tray removed;
Fig. 9c is a perspective view of the base portion shown in Fig. 9a with the food-collecting tray arranged in an alternate position;
Fig. 10 is a schematic diagram showing a cross-sectional view of part of the food slicer and its adjustment mechanism; and
Fig. 11 is a schematic diagram showing a gear mechanism arranged inside the stage of the food slicer.

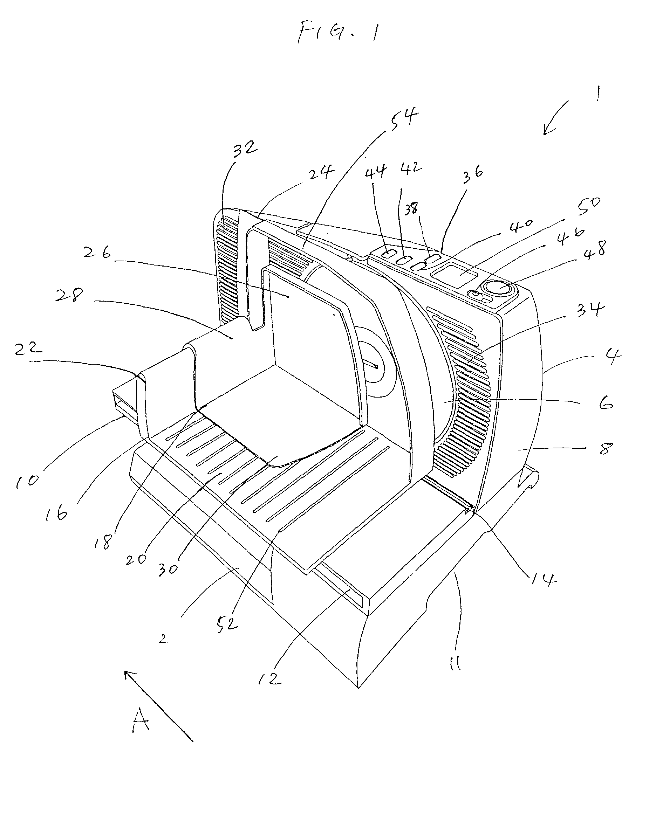

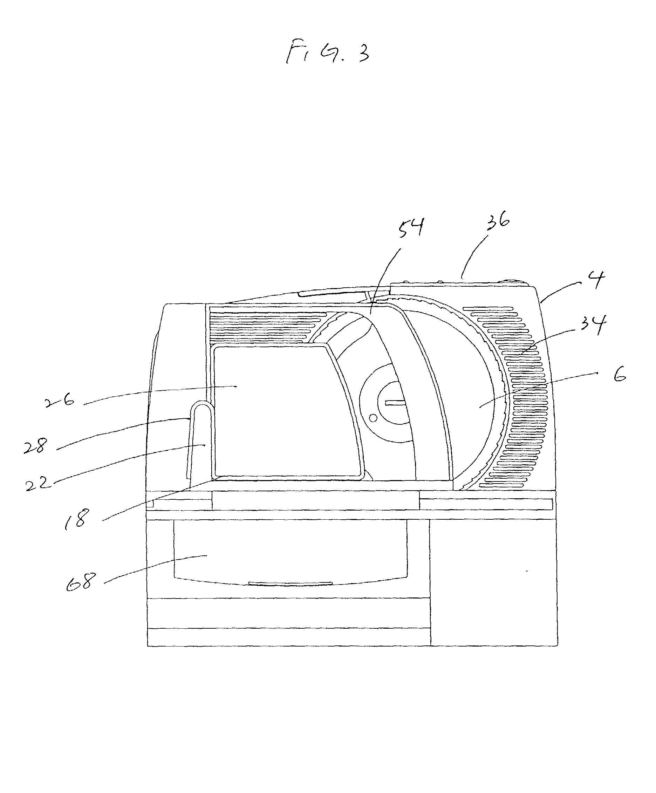

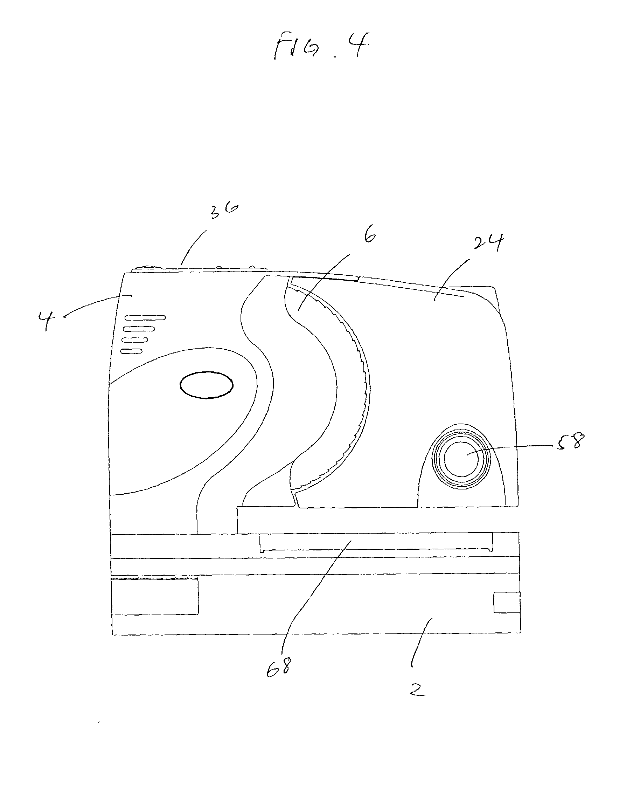

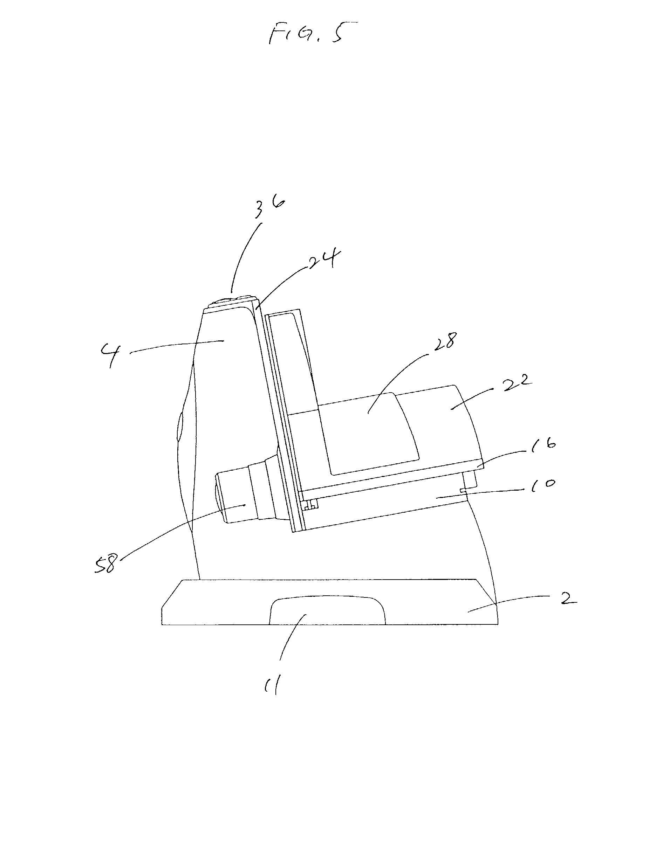

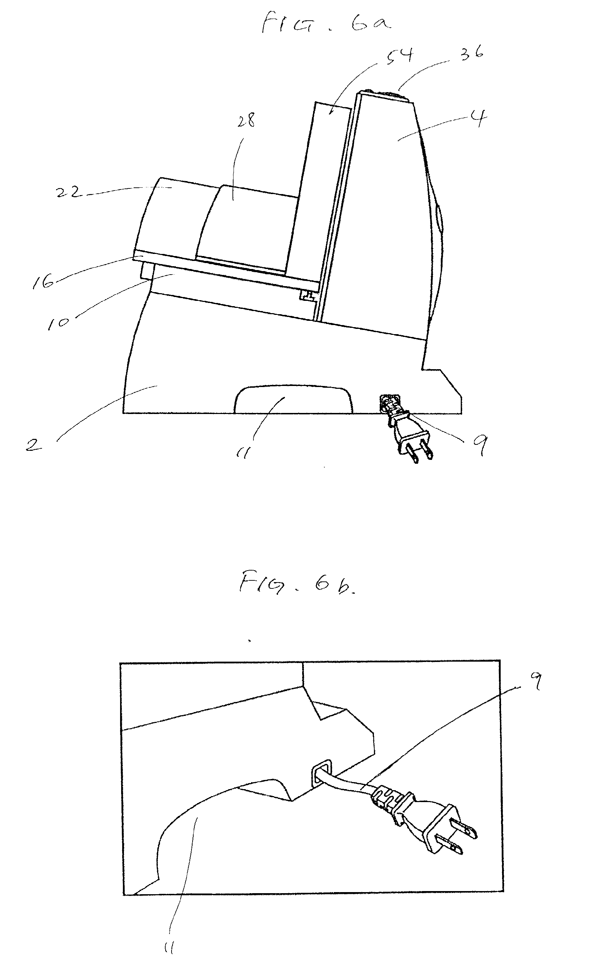

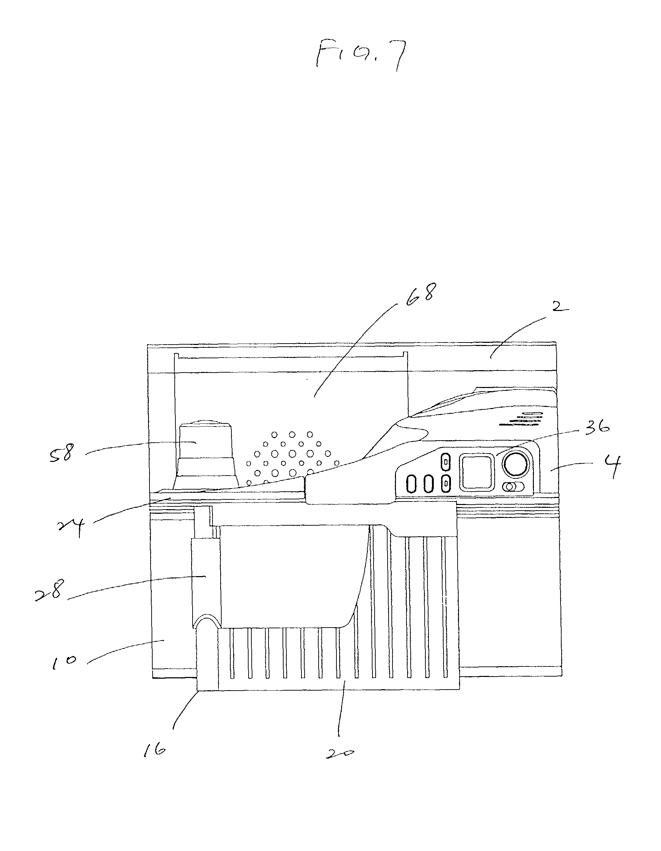

An embodiment of an electric food slicer according to the present invention is shown in Figs. 1 to 11, and generally designated as 1. Referring firstly to Figs. 1-7, the slicer 1 is a stand alone unit of a conveniently small size which can be placed on a work surface in a kitchen or at some other location in the home as desired. Alternatively, it can also be used in the meat section of a supermarket or grocery store.

The slicer 1 comprises a base 2 and a generally upstanding main body 4 to which a cutting means in the form of disc-like rotary blade 6 is attached. A lower portion 8 of the main body 4 is connected to the base 2. A stage 10 is fixedly connected to the base 2. A power cord 9 retractable into the base 2 is connected to the slicer 1. A handle means 11 in the form of a pair of recess to fit the grip of a user is disposed on opposite sides of the base 2. The stage 10 is arranged generally perpendicular to the main body 4. The stage 10 provides a pair of guiding grooves 12, 14 and disposed on opposite sides thereof. A movable food feeder 16 in the form of a carriage fitted with a food presser 18 slidably sits on top of the stage 10 and includes a planar plate 20 and an end wall 22 which upstands perpendicularly upward at one end of the plate 20. A vertical wall member 24 is arranged adjacent to and extending from the main body 4 and is connected at its lower end to the stage 10, with the blade 6 being exposed over a region adjacent the wall member 24. The vertical wall member 24 is approximately co-planar with the blade 6.

The food presser 18 has an upstanding wall 26 joined to two adjoining orthogonally arranged plates including generally horizontal plate 30 and vertical plate 28, the plate 28 having an upper bent over edge which overlies the wall 22. The food presser 18 rests on and can be lifted off the feeder 16. When rested thereon, the horizontal plate 30 lies in contact with the plate 20 of the feeder 16. The food presser 18 is slidably movable towards or away from the wall 24, guided by the bent over edge of the plate 28.

In use, the feeder 16 of the slicer 1 is firstly slid away from the circular blade 6 in the direction of an arrow "A" as shown in Fig. 1. The food presser 18 is also slid away from the wall 24 to yield an area on the feeder 16 for an item of food to be sliced to be positioned in an area defined by the wall 26, the wall 22 and the wall member 24. The food presser 18 is then pressed against the item of food so that the food is in contact with a corrugated surface 32 defined by one side of the wall member 24. The item of food to be sliced is thus constrained between the wall member 24 and the wall 26 of the presser 18. As the feeder 16 with the item of food secured behind the presser 18 is being slid laterally back and forth on the stage 20, the food engages the exposed region of the blade 6 and food slices are removed from the chunk of food by the circular blade 6.

The circular blade 6 is arranged generally vertically on the main body 4. A surface 34 defined by one side of the main body 4 facing the stage 10 and arranged adjacent to the circular blade 6 is corrugated. A control panel 36 is arranged at an upper end of the main body 4. The control panel 36 includes a number of control buttons 38, 40, 42, 44, 46 and main power switch 48 as discussed further below. A display screen 50 is also provided in the control panel 36 for displaying at least one characteristic (e.g. weight, thickness, etc.) of food slices to be removed from an item of food. The display screen 36 may also display various conditions of the slicer 1. For instance, the display screen 36 may show the operation status of the slicer 1. The display screen 36 used in this embodiment is a liquid crystal display (LCD). The control buttons 38, 40, 42, 44, 46 arranged on the control panel 36 are an on/off button, safety lock button for disabling the blade 6 when not in use, two function buttons for switching a display mode of the LCD 50 (i.e. between weight or thickness read-out as discussed further below) of the slicer 1 and button for changing between metric and imperial units under the weight mode, respectively.

A plurality of rollers (not shown) are connected to an underside of the plate 20 of the feeder 16, which engage in the grooves 12, 14 of the stage 10 so that the feeder 16 can be slid up and down the stage 10. Parallel lines of ridges 52 are arranged on an upper side of the plate 20 which defines a surface on which food to be sliced is rested. The food presser 18 having the bent over edge 28 overlaying the wall 22 of the feeder 16 allows itself to slide towards or away from the wall. The feeder 16 also includes a safety shield 54, which is of generally inverted U-shape, arranged at the side of the feeder 16 thereof adjacent the main body 4 and the blade 6. The shield 54 comprises a strip of molded plastics joined at lower ends to the feeder 16, with generally vertically extending portions and a horizontal upper portion. This shield 54 surrounds from above the exposed region of the blade 6 restricting access to the blade 6.

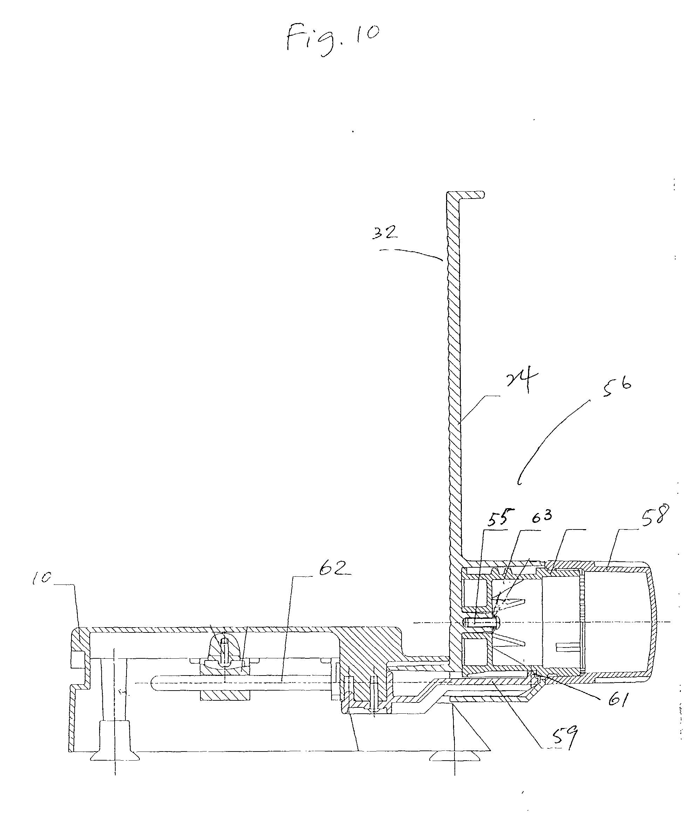

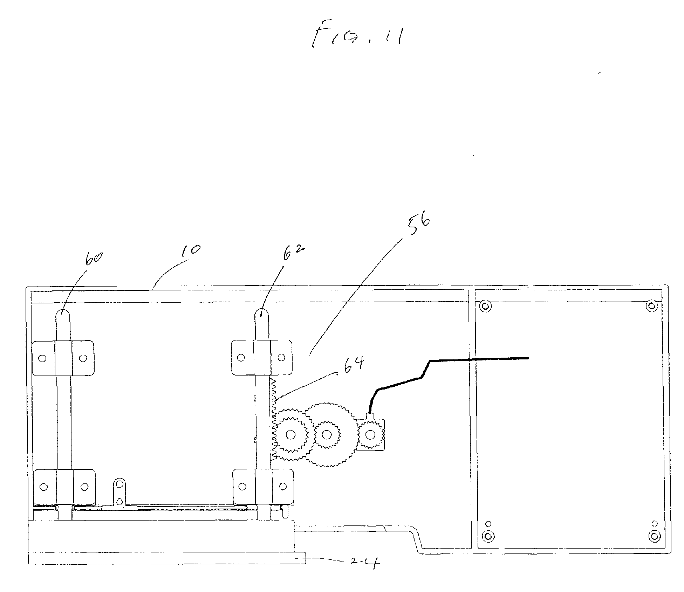

Referring to Figs. 1, 2, 4, 5 and 8, the vertical wall 24 arranged adjacent to and generally extending from the main body 4 is connected at its lower end with the stage 10 via a gear mechanism 56, as shown in Figs. 10 and 11. The wall member 24 defines the corrugated surface 32 on one face which faces the feeder 16 and is movable towards or away from the stage 10 via the gear mechanism 56. The gear mechanism 56 comprises a control knob 58 rotatably attached by a screw 55 to a lower end of the wall member 24, a fixed support plate 59 fixedly attached to the stage 10 with an upstanding lug 61 disposed at an end, and a pair of axles 60, 62 supporting the wall member 24 and extending from the lower end of the wall member 24 into the stage 10 where other components of the gear mechanism 56 are located. The control knob 58 is connected to a cam means having an inclined groove 63 arranged along its circumference. The lug 61 of the support plate 59 engages in the groove 63 and the control knob thus controls a lateral position of the wall 24 in relation to the blade 6 of the main body 4. The axle 62 (and the axle 60) which is slidably movable into or out of the stage 10 has attached thereto a toothed rack 64 which engages with other gears of the gear mechanism 56. As the control knob 58 is rotated, the control knob 58 guided by the lug 61 at its groove 63 is moved laterally along with the attached wall 24. Depending on the direction of rotation, the control knob 58 together with the wall 24 is either moved away from the stage 10 or pulled towards the stage 10. The position of the wall member 24 and the control knob 58 attached therewith are detectable by a sensor (not shown) located in the stage 10. The sensor may preferably be a transducer which outputs a signal dependent on position, and may be linked directly to the stage 10, or as shown in Fig 11 to part of the gear train so as to sense rotation of this. An example of a sensor which may be used is an opto switch sensor (Model: EC16) manufactured by Taiwan Sheng Qi Company. The LCD screen 50 is connected to the sensor output via a connecting cable and is able to display a reading in dependence of the output signal of the sensor and hence in dependence on the position of the wall 24.

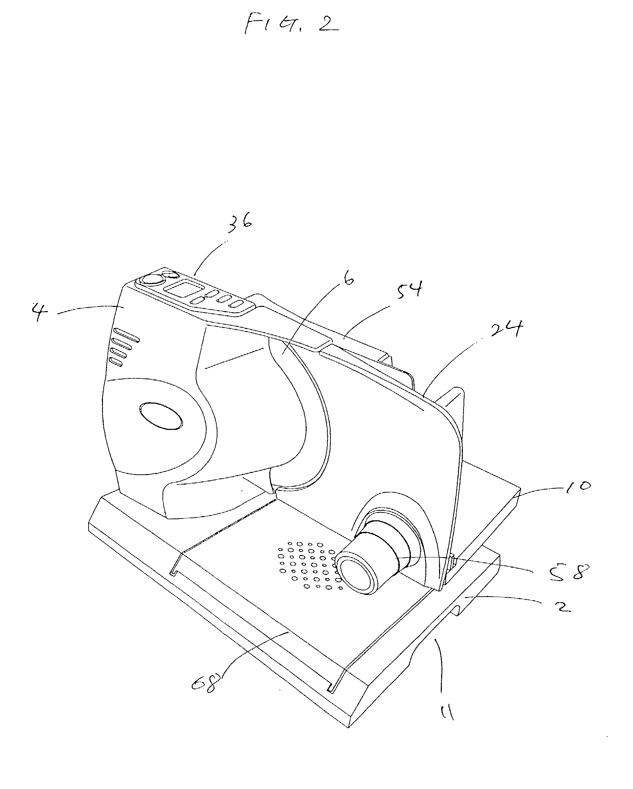

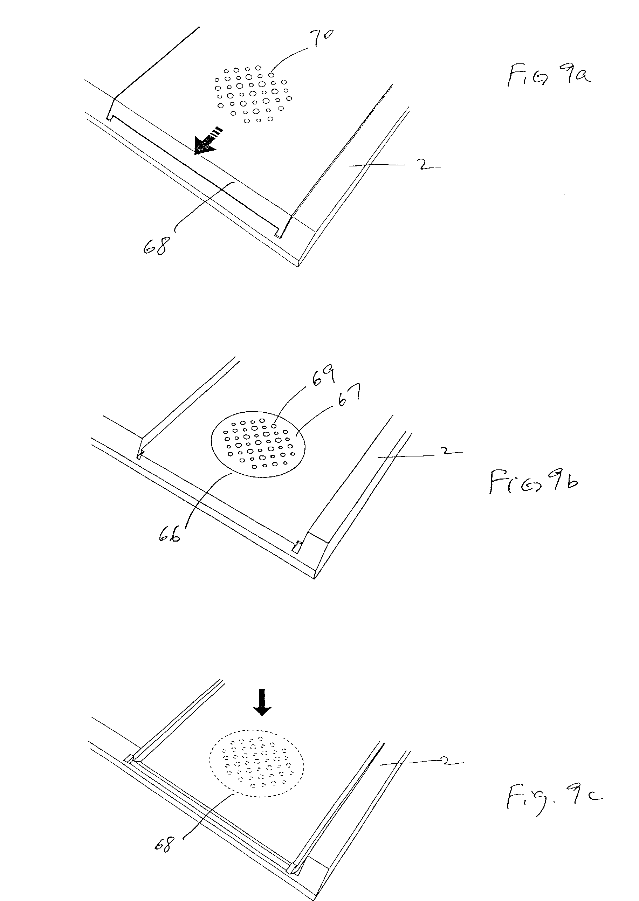

As shown in Figs. 2-4, 7 & 9a-c, the base 2 further comprises an integrated weighing scale 66 including a food-collecting tray 68, built in to the base 2 as shown in Figure 9b. The stage 10 is arranged on one side of the base 2 while the weighing scale 66 is arranged on the opposite side of the wall member 24 where sliced food will collect and with the blade 6 generally separating the two. The weighing scale 66 comprises the food-collecting tray 68 which serves as a pan for the scale, an electronic weight sensor and associated circuitry (not shown) sensing the weight of the tray 68 and any food rested thereon. A variety of electronic scales can be utilized. The food-collecting tray 68 is generally planar having upturned opposite edge regions and can be slidably removed from the base 2 away from the weighing scale 66, as illustrated by the arrow in Fig. 9a. The food-collecting tray 68 has a plurality of recesses 70 (see Fig. 9a) arranged on the side uppermost when inverted. The electronic weight sensor is disposed beneath a disc 67 on which a number of protrusions 69 are arranged. The protrusions 69 which are engagable with the recesses 70 of the food-collecting tray 68 are shown in Fig. 9c. When the scale 66 is not in use, the food-collecting tray 68 is snap fitted and positioned face down with its recesses 70 facing up, as shown in Figs. 2, 7 & 9a. In this position, the edge regions of the food-collecting tray 68 are received in complementary recesses arranged on the base 2 surrounding the weighing scale 66. When the weighing scale 66 is to be used, the food-collecting tray 68 is slidably removed from the base 2 and placed in its upturned position on the weighing scale 66 with the recesses 70 engaged with and resting on the protrusions 69. In this position, the weighing scale 66 is thus ready to weigh food rested on the food-collecting tray 68. The weight sensor senses the weight exerted on the protrusion 69 via the disc 67. The food-collecting tray 68 thus functions as a scale pan as well as for collecting sliced food. An example of the weight sensor which may be used is a strain sensor (Model: YZC-1D-B) manufactured by Guangzhou Electronics Testing and Instruments Factory.

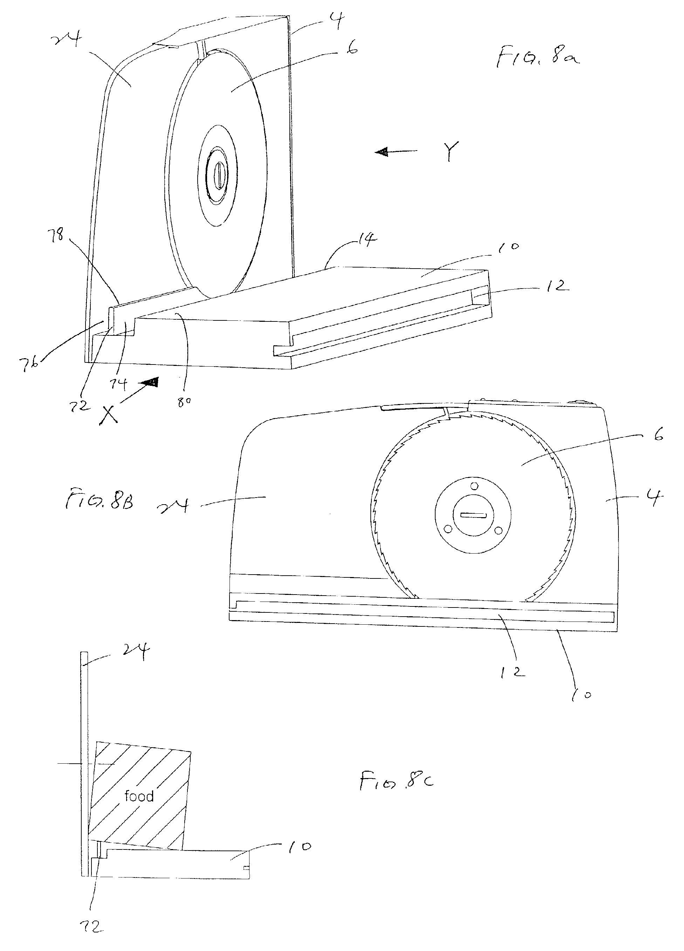

The slidable feeder 16 together with the food presser 16 may be removed from the stage 10 for cleaning. An obstructing means 72 which is arranged adjacent to the wall member 24 and generally in the form of an elongate rectangular block is located in a recess of the stage 10 between the wall member 24 and the guiding groove 14. A gap 74 is allowed between the groove 14 and the obstructing means 72 so that the movement of the feeder 16 is not disrupted. A further gap 76 is allowed between the obstructing means 72 and the wall member 24 so that the operation of the blade 6 is not interfered. The obstructing means 72 may be unitarily molded to or removably connected to the stage 10. For the sake of explanation, Fig. 8a only shows the stage 10, main body 4, circular blade 6, the wall member 24 and the obstructing means 72. Referring specifically to Figs. 8a and 8c, the obstructing means 72 protruding from the stage 10 has an upper side 78 higher than an upper surface 80 of the stage 10. It is understood that in an event that a user placed an item of food (labeled "F" in Fig. 8c) directly on the stage 10 with the feeder 16 removed, the dimension of the obstructing means 72 in the direction generally parallel to an aixs of the blade discourages proper contact of the food with the wall member 24 and proper positioning of the food on the stage 10 as illustrated in Fig. 8c. Thus slicing the item of food without using the food feeder 16 is very difficult, if not impossible. Users will then be deterred to use the food slicer 1 improperly without the stage 10, reducing the risk of accidents. The upper side 78 of the obstructing means 72 is however arranged at the same level or below the upper surface of the plate 20 of the feeder 10. The dimension and positioning of the obstructing means 72 is important so that on one hand slicing food without using the feeder 16 is discouraged and on the other hand the operation of the slicer 1 when used properly is not affected.

In use, the food-collecting tray 68 of the weighing scale 66 is removed from its stowed away position and is turned upwardly to its operational position with the recesses 70 facing down, as shown in Fig. 9c whereby it is ready to receive sliced food. The feeder 16 is slid laterally away from the blade 6 and the food presser 18 is slid away from the wall. The food to be sliced is placed on the feeder 16 and the food slicer 1 can be turned on by pressing the main power switch 48. The circular blade 6 thus becomes operational for slicing. The LCD screen 50 which is powered by a battery (not shown) is also activated. The desired thickness of food slices is controlled by adjusting the control knob 58 and thus the lateral displacement between the wall member 24 and the circular bade 6. As mentioned above, the sensor located in the stage 10 can detect the position of the wall member 24, and can be calibrated to give a direct indication of slice thickness. It can be understood that when the corrugated surface 32 of the wall member 8 is in a position aligning with the circular blade 6, the chunk of food would not touch the cutting edge of the circular blade 6 when the feeder 16 is being slid across the feeder 16 towards the blade 6 in an a direction opposite to the arrow "A" in Fig. 1. As a result, no food slice would be removed from the chunk of food. In this position, the LCD display 50 would show the thickness as "0". When the wall member 24 is adjusted by the rotating knob 58 so that it moves away from the stage 10, a lateral displacement (e.g. 1mm) is created between the corrugated surface 32 of the wall member 24 and the circular blade 6. In this position, the LCD screen 50 would show a corresponding reading. In this configuration, the food slicer 1 is ready to remove a food slice with a thickness equal to the lateral displacement (e.g. 1mm) from the chunk of food as the feeder 16 slides in a direction opposite to the arrow "A". Similarly, when the wall member 24 is adjusted further away from the stage 10, thicker slices are removed from the chunk of food. The sensor directly detects the position of the wall member 24 and consequently the thickness of a food slice to be removed. The LCD screen 50 displays the reading of the detection means, i.e. the desired thickness of food slices.

As the food slice is removed from the chunk of food by the circular blade 6, it falls on the food-collecting tray 68 arranged on the other side of the wall member 24. Since the food-collecting tray 68 is arranged on the weighing scale 66, the weight of the food slice is immediately detected and displayed by the LCD 50. If the weight of the food slice is more than desired, a user can simply reduce the thickness of subsequent slices by reducing the lateral displacement between the corrugated surface of the wall member 24 and the circular blade 6 through adjusting the control knob 58 so that the wall member 24 is brought closer to the stage 10. It is understood that the LCD screen 50 is adapted to display both the thickness of the food slice and the weight of the food slice. The food slicer 1 thus allows a user to conveniently produce food slices either of desired thickness or total desired weight which is extremely useful for people who are carefully monitoring their dietary input.

When using the food slicer 1 with the feeder 16, the shield 54 restricts access to the blade 6 during slicing operation. Injuries caused by the moving circular blade 6 are thus reduced.

## Claims

1. An electric food slicer comprising a main body with a base region, a disc-like rotary cutting blade supported on the main body, weighing means disposed on the base region adjacent to said blade at a position where sliced food will collect, and visual display means to give a visual indication of the weight of food collected on said weighing means.

2. An electric food slicer according to Claim 1 further comprising a collecting tray which is movable between an inverted position in which it overlies the weighing means and is secured to the base, and an upturned weighing position in which it rests directly on the weighing means.

3. An electric food slicer according to Claim 2 wherein the collecting tray is generally planar with upturned opposite edge regions, and wherein the base is provided with recesses into which the edge regions are received in the inverted position.

4. An electric food slicer according to Claim 2 or 3 wherein the weighing means is provided with a plurality of upstanding protrusions and wherein a surface of the tray which is uppermost in the inverted position is provided with corresponding recesses to receive said protrusions in the weighing position.

5. An electric food slicer according to any preceding claim wherein the visual display means is a liquid crystal display.

6. An electric food slicer according to any preceding claim wherein a movable wall is disposed adjacent to said cutting blade and is generally co-planar therewith against which in use, food to be cut is pressed, and wherein sensor means are arranged to output a signal indicative of the relative displacement between the blade and movable wall, which dictates the slicing thickness.

7. An electric food slicer according to Claim 6 wherein adjustment means are provided to allow a user to adjust the position of the movable wall relative to the blade, said sensor means detecting the position of said adjustment means.

8. An electric food slicer according to Claim 7 wherein the adjustment means include a rotatable knob having cam means for moving a support for said wall, rotatable gear means being connected to said support with said sensor being arranged to detect the rotation of said gear means.

9. An electric food slicer according to Claim 6, 7 or 8 wherein the output signal is displayed on said display means as a slice thickness.

10. An electric food slicer according to any preceding claim further comprising handle means for carrying said slicer.

11. An electric food slicer according to any preceding claim further comprising a power cord retractable into said slicer when not in use.

12. An electric food slicer comprising a main body supporting a disc-like rotary cutting blade having an exposed region, a generally upwardly extending wall generally co-planar therewith, and a carriage extending generally perpendicular to the wall wherein a food-obstructing body is disposed in the region where the carriage meets the wall.

13. An electric food slicer according to Claim 12 wherein the food-obstructing body is an elongate strip which extends at least beneath the exposed region of the blade.

14. An electric food slicer according to Claim 12 or 13 wherein the food-obstructing body has a dimension in a direction generally parallel to the axis of the blade which obstructs an item of food placed on the stage from being pushed against said wall.

15. An electric food slicer according to any preceding claim wherein the stage carries a movable carriage which is movable in a direction generally parallel to the plane of the blade, the food-obstructing body being located on the stage between an edge of the carriage and the upwardly extending wall.

16. An electric food slicer according to Claim 15 wherein a top of the food-obstructing body lies at the same level or below the plane of the carriage when fitted on the stage.

17. An electric food slicer according to claim 15 or 16 wherein the stage is provided with a pair of elongate grooves or openings into which rollers provided on the carriage extend, the food obstructing body being disposed adjacent to that elongate groove which lies closest to the upwardly extending wall.

18. An electric food slicer according to any preceding claim wherein the food obstructing body is molded unitarily with the stage.

19. An electric food sliccr comprising a main body having a generally upwardly extending wall and supporting a disc-like rotary cutting blade generally co-planar therewith, and a food supporting carriage on which food to be sliced is placed, wherein a generally inverted U-shaped shield is provided which extends at one end generally upwardly from said carriage and extending above the blade.

20. An electric food slicer according to Claim 19 wherein the blade shield comprises a strip which has width in a direction generally parallel to the blade axis which is substantially greater than its thickness.
